# FASCICULE DE BREVET EUROPEEN

(11) **EP 1 293 379 B1**
(45) Date de publication et mention de la délivrance du brevet: **23.12.2009**
(21) Numéro de dépôt: 02292214.0
(22) Date de dépôt: 10.09.2002
(51) Int. Cl.: B60Q 1/04

(54) **Agencement pour la fixation d'un élément d'équipement sur un élement de structure de caisse**
Befestigung von einem Ausrüstungsteil auf ein Teil der Baukarosseriestruktur
Fixation of an equipment part on an element of the vehicle body structure

(30) Priorité: 14.09.2001 FR 0112068
(43) Date de publication de la demande: 19.03.2003
(73) Titulaire: VALEO VISION, 93012 Bobigny Cedex (FR)
(72) Inventeur: Rebuffo, Claudio, Nichelino (Torino) 10042 (IT); Lopez Vasco, Antonio, 23600 Martos (Jaen) (ES); Lopez Moral, Francisco, 23600 Martos (Jaen) (ES)

(56) Documents cités:
- EP-A- 0 795 718
- EP-A- 1 000 804
- DE-C- 4 426 785

## Description

L'invention concerne un agencement pour la fixation et le réglage d'un élément d'équipement sur un élément de structure de caisse.

L'invention concerne plus particulièrement un agencement pour la fixation et le réglage de la position d'un élément d'équipement sur un élément de structure de caisse ou de carrosserie d'un véhicule automobile, notamment d'un feu ou d'un phare, du type dans lequel l'élément d'équipement comporte une face de fixation sensiblement plane et d'orientation longitudinale qui comporte au moins trois moyens de fixation de l'élément d'équipement sur l'élément de structure de caisse.

Lors de la fabrication d'un véhicule automobile, les tolérances de réalisation des divers éléments du véhicule, impliquent que des jeux peuvent exister entre les éléments d'équipement et les éléments de carrosserie qui les entourent. Ces jeux peuvent aussi différer d'un véhicule à l'autre issus d'une même chaîne de fabrication.

Ces jeux peuvent nuire à l'aspect visuel général du véhicule automobile et/ou être la source de dysfonctionnements de certains éléments d'équipement.

Par exemple, il peut exister des jeux différents entre deux dispositifs d'éclairage d'un même véhicule et les éléments de carrosserie, ce qui nuit considérablement à l'esthétique du véhicule.

Les techniques de fabrication actuelles ne permettent pas d'obtenir des jeux réduits sans élever fortement le coût de fabrication du véhicule. Il est donc nécessaire de prévoir des moyens permettant de régler la position de chaque élément d'équipement, soit pour avoir une position précise, soit pour équilibrer les écarts de positionnement de plusieurs éléments d'équipement.

Selon une première conception connue, on a proposé des moyens de fixation d'un élément d'équipement qui sont mobiles de manière réglable par rapport à la structure de caisse du véhicule. Toutefois, pour régler la position de l'élément d'équipement, il faut pouvoir accéder à tous les moyens de fixation, ce qui nécessite parfois de pouvoir accéder par exemple à la fois à l'avant et à l'arrière de l'élément d'équipement.

Un tel agencement selon le préambule de la revendication 1 est connu du document DE 44 26 785 C1.

Dans les véhicules actuels, l'optimisation de l'occupation des volumes inutilisés est un souci constant des concepteurs, notamment en ce qui concerne le compartiment moteur. De ce fait, les éléments d'équipement ne sont pas accessibles par certains côtés après que le véhicule ait été entièrement assemblé. Il est alors difficile d'accéder à tous les moyens de fixation en vue d'un réglage final de position.

Selon une seconde conception connue, on a proposé des pattes qui sont déformables élastiquement. Celles-ci présentent l'inconvénient d'être peu résistantes et/ou de ne pas absorber suffisamment les vibrations.

Pour remédier à ces inconvénients, la présente invention propose un agencement dans lequel le réglage de la position de l'élément d'équipement s'effectue en agissant sur une partie des éléments de fixation.

Dans ce but, l'invention propose un agencement du type décrit précédemment, caractérisé en ce que les moyens de fixation comportent au moins un premier élément intermédiaire de fixation qui est destiné à être fixé axialement à l'élément de structure de caisse et qui comporte des moyens de réglage de la position de l'élément d'équipement par rapport à l'élément de structure de caisse, et au moins un second élément intermédiaire de fixation qui est destiné à être fixé axialement à l'élément de structure de caisse et qui comporte des moyens élastiques interposés entre le second élément intermédiaire de fixation et l'élément d'équipement, pour permettre la fixation préalable puis le réglage de la position de l'élément d'équipement par rapport à l'élément de structure de caisse.

Selon d'autres caractéristiques de l'invention :
- les éléments intermédiaires de fixation sont disposés sensiblement à proximité des raccordements des bords longitudinaux et transversaux de la face de fixation ;
- l'agencement comporte une paire de premiers éléments intermédiaires et une paire de seconds éléments intermédiaires ;
- les premiers éléments intermédiaires de fixation sont disposés sensiblement à proximité des extrémités d'un bord transversal de la face de fixation et les seconds moyens intermédiaires de fixation disposés sensiblement à proximité des extrémités du bord transversal opposé de la face de fixation ;
- l'axe de chaque élément intermédiaire de fixation est sensiblement parallèle à la direction d'orientation longitudinale de la face de fixation ;
- chaque moyen de fixation comporte une patte qui fait saillie à partir de la face de fixation et dont un perçage reçoit une douille, notamment cylindrique, formant l'élément intermédiaire de fixation dont un perçage est destiné à être traversé par un moyen de verrouillage axial de l'élément intermédiaire de fixation ;
- la douille formant le premier élément intermédiaire de fixation est susceptible de coulisser axialement de manière réglable par rapport à la patte qui la reçoit ;
- la périphérie de la douille est filetée pour coopérer avec un taraudage formé à l'intérieur du perçage de la patte ;
- le moyen de verrouillage axial est monté avec jeu radial dans la douille pour permettre un mouvement transversal de l'élément d'équipement par rapport à l'élément de structure de caisse ;
- un élément tubulaire élastique est interposé entre la douille formant le second élément intermédiaire de fixation et la patte associée ;
- la face de fixation de l'élément d'équipement est portée par une platine indépendante sur laquelle l'élément d'équipement est fixé.

D'autres caractéristiques et avantages de l'invention apparaîtront à la lecture de la description qui suit, pour la compréhension de laquelle on se reportera aux dessins annexés dans lesquels :
- la figure 1 est une vue partielle en perspective de la partie avant d'un véhicule automobile comportant un dispositif d'éclairage ;
- la figure 2 est une vue en perspective du dessous des moyens de fixation du dispositif d'éclairage de la figure 1 ;
- la figure 3 est une vue en coupe selon un plan longitudinal de la platine conforme à l'invention représentant un détail d'un moyen de fixation et d'un premier élément intermédiaire associé ;
- la figure 4 est une vue similaire à la figure 3 représentant un détail d'un moyen de fixation et d'un second élément intermédiaire associé ;
- la figure 5 est une vue en perspective d'une platine comportant les moyens de fixation conformes à l'invention ;
- la figure 6 est une vue latérale de la platine conforme à l'invention ;
- la figure 7 est une vue en coupe par un plan horizontal avec arrachement de chaque élément intermédiaire et des manchons associés ;
- la figure 8 est une vue en bout de la platine conforme à l'invention.

Dans la description qui va suivre des éléments identiques, similaires ou analogues seront désignés par les mêmes chiffres de référence.

A titre non limitatif, on adoptera les termes et orientations longitudinales "L", verticales "V", transversales "T", supérieure, inférieure, avant et arrière en référence aux figures. Il sera compris qu'il est possible d'adopter une convention différente sans sortir du cadre de l'invention.

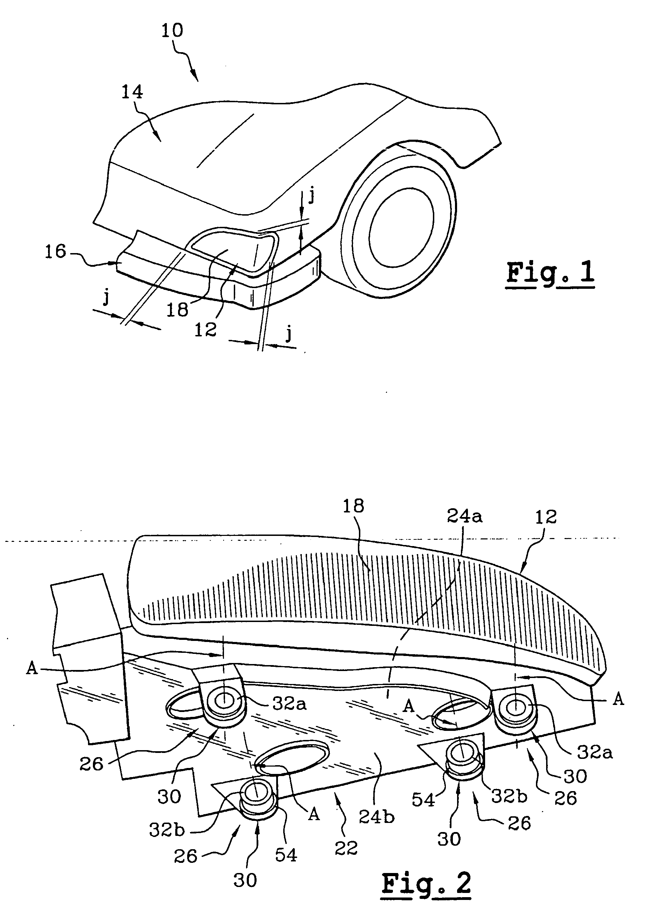

On a représenté à la figure 1 un véhicule automobile 10 qui comporte un élément d'équipement 12, notamment un phare, un élément de carrosserie extérieure 14 et un pare-chocs 16. Les tolérances de réalisation des différents éléments du véhicule automobile 10 impliquent que des jeux "j" peuvent exister entre d'une part la face avant 18 de l'élément d'équipement 12 et d'autre part l'élément de carrosserie extérieure 14 et/ou le pare-chocs 16. Ces jeux "j" peuvent ne pas être identiques pour deux véhicules 10 qui proviennent d'une même chaîne de montage, voire pour deux éléments d'équipement 12 symétriques d'un même véhicule 10.

Afin de remédier à cet inconvénient, comme représenté sur la figure 2, le phare 12 comporte une face de fixation. Cette face de fixation est sensiblement plane, d'orientation longitudinale "L" et elle reçoit des moyens de fixation 26.

Selon un mode de réalisation particulier et non limitatif de l'invention, la face de fixation de l'élément d'équipement 12 appartient ici à une platine 22 indépendante sur laquelle l'élément d'équipement est fixé. La platine 22 reçoit le phare 12 sur sa face supérieure 24a, et elle reçoit les moyens de fixation 26 sous sa face inférieure 24b.

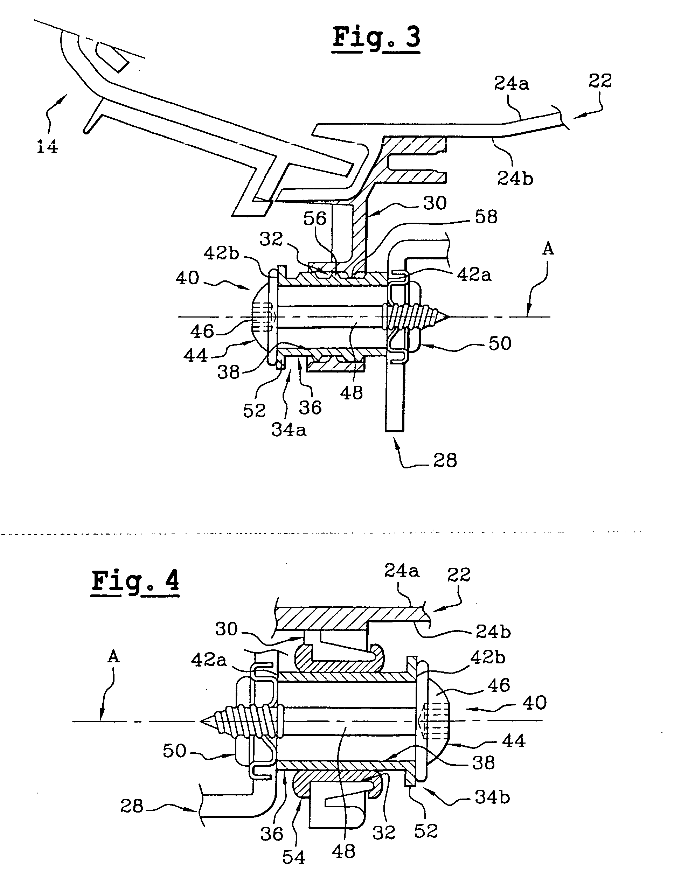

Comme on peut le voir sur les figures 3 et 4, la platine 22 comporte des moyens de fixation 26 qui sont ici reliés à un élément de structure de caisse 28.

Chaque moyen de fixation 26 comporte une patte 30 qui fait saillie à partir de la face inférieure de la platine 22. La patte 30 comporte, au niveau de son extrémité libre, un perçage 32, notamment cylindrique, qui reçoit un élément intermédiaire de fixation 34a, 34b.

Les éléments intermédiaires de fixation 34a, 34b comportent chacun une douille 36 globalement tubulaire cylindrique qui est reçue par le perçage 32 de la patte 30. La douille 36 comporte un perçage 38 qui est sensiblement de même orientation axiale que la douille 36, et qui est destiné à être traversé par un moyen 40 de verrouillage axial. Une première extrémité axiale 42a de la douille 36 prend appui axialement contre l'élément de structure de caisse 28.

De manière non limitative de l'invention, chaque moyen de verrouillage 40 est notamment constitué d'une vis 44 dont une tête 46 prend appui contre la seconde extrémité axiale 42b de la douille 36. La vis 44 comporte aussi une tige 48 filetée qui traverse longitudinalement le perçage 38 de la douille 36 qui lui est associée. La vis 44 coopère avec un écrou 50 prisonnier qui est fixé à l'élément de structure de caisse 28.

Avantageusement, la seconde extrémité 42b comporte un épaulement 52 destiné à répartir les efforts de pression entre chaque tête de vis 46 et la seconde extrémité 42b de la douille 36 qui lui est associée.

La platine 22 comporte deux types d'éléments intermédiaires de fixation 34a, 34b. Des premiers éléments intermédiaires 34a sont accessibles après le montage de l'élément d'équipement 12. Ces premiers éléments intermédiaires 34a sont fixés axialement à l'élément de structure de caisse 28, et, avant leur fixation définitive, ils sont mobiles axialement de manière réglable par rapport à la platine 22 et/ou transversalement par rapport à l'élément de structure de caisse 28 pour permettre le réglage de la position du phare 12 par rapport à l'élément de structure de caisse 28.

Les seconds éléments intermédiaires de fixation 34b ne sont plus accessibles après le montage de l'élément d'équipement 12. Ces seconds éléments intermédiaires de fixation 34b sont fixés axialement à l'élément de structure de caisse 28, et ils comportent des moyens élastiques 54 interposés entre la platine 22 et l'élément de structure de caisse 28.

Les moyens élastiques 54 permettent la fixation de l'élément d'équipement 12 sur l'élément de structure de caisse 28 par l'intermédiaire des moyens de fixation 26 associés aux seconds éléments intermédiaires de fixation 34b.

De plus, lors du réglage de la position de l'élément d'équipement 12 par rapport à l'élément de structure de caisse 28, les moyens élastiques 54 sont susceptibles de se déformer pour permettre un déplacement de l'élément d'équipement 12 par rapport à l'élément de structure de caisse 28.

Comme on l'a représenté sur la figure 3, la douille 36 qui constitue chaque premier élément intermédiaire de fixation 34a est susceptible de coulisser axialement dans le perçage 32 de la patte 30 associée. Pour permettre ce mouvement de coulissement, la périphérie de la douille 36 comporte un filetage 56 qui coopère avec un taraudage 58 formé à l'intérieur du perçage 32 de la patte 30 associée. Ainsi, un vissage ou un dévissage de la douille 36 dans le taraudage 58, implique un mouvement de coulissement axial de la douille 36.

L'élément intermédiaire de fixation 34a peut comporter une forme du type "hexagonale" (non représentée) à proximité de l'épaulement 52 Pour permettre le réglage de la position. Cette forme "hexagonale" permet par exemple de manoeuvrer le premier élément intermédiaire de fixation 34a à l'aide d'une clé complémentaire de vissage.

Par ailleurs, les premiers éléments intermédiaires de fixation 34a sont mobiles transversalement de manière réglable par rapport à l'élément de structure de caisse 28, c'est à dire selon des directions radiales par rapport à l'axe "A" de la douille 36. Cette mobilité est obtenue par un jeu radial entre les tiges 48 des vis 44 et le perçage 38 de la douille 36. Plus précisément, le diamètre de chaque tige 48 est inférieur au diamètre intérieur du premier élément intermédiaire de fixation 34a associé.

Ce jeu radial permet un mouvement de chaque premier élément intermédiaire de fixation 34a par rapport à l'élément de structure de caisse 28 dans un plan sensiblement perpendiculaire à la direction principale longitudinale "L" des moyens de fixation 26, c'est à dire ici dans un plan sensiblement transversal. L'amplitude de chaque mouvement est définie par la valeur de chaque jeu radial.

Comme on l'a représenté sur la figure 4, un élément tubulaire élastique 54 est monté dans le perçage 32 de la patte 30 associée de manière à être interposé entre la douille 36 qui constitue le second élément intermédiaire de fixation 34b et la patte 30. Cet élément d'articulation élastique 54 est par exemple réalisé en un matériau élastomère et il peut supporter des déformations axiales, radiales ou de torsion. Les amplitudes des déplacements sont définies par les dimensions et la nature du matériau élastomère dans lequel est réalisé l'élément d'articulation élastique 54.

L'élément d'articulation élastique 54 permet à la platine 22 de se déplacer par rapport à l'élément de structure de caisse lors du réglage de la position du phare 12. L'élément d'articulation élastique 54 assure aussi un maintien en position de la platine 22 par rapport à la structure de caisse 28, indépendamment de toute manipulation.

Avantageusement, les dimensions et la nature du matériau dans lequel est réalisé l'élément d'articulation élastique 54 lui permettent aussi d'assurer un amortissement des vibrations de l'ensemble formé par la platine 22 et le phare 12.

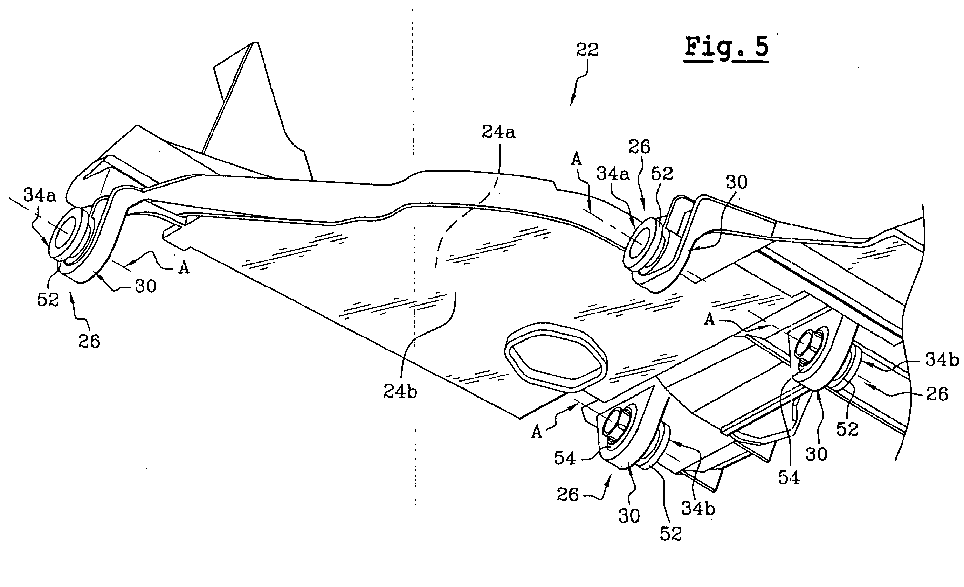

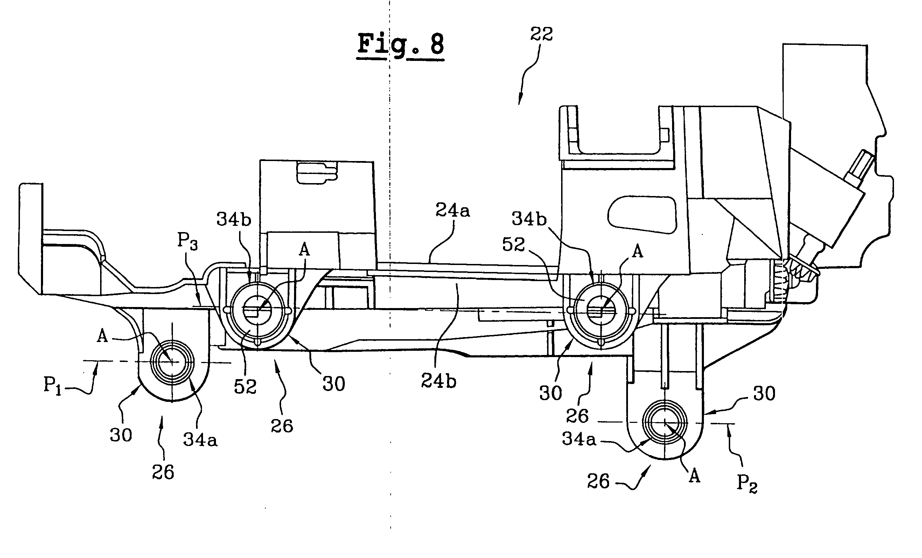

Les figures 5 à 8 représentent plus particulièrement une platine 22 qui comporte une paire de premiers éléments intermédiaires de fixation 34a et une paire de seconds éléments intermédiaires de fixation 34b.

Dans un véhicule conventionnel, lors du montage d'un élément d'équipement sur l'élément de structure de caisse associé ou lors du réglage de sa position, notamment lorsqu'il s'agit d'un dispositif d'éclairage, il n'est généralement pas possible d'accéder à ses parties latérales. Pour remédier à cet inconvénient, les moyens de fixation 26 conformes à l'invention sont positionnés orientés de sorte que leurs axes "A" soient sensiblement parallèles à la direction générale longitudinale "L" de la platine 22, et les éléments permettant le réglage, notamment les têtes 46 des vis 44, sont agencées à l'avant de la platine 22.

Pour faciliter l'accès aux moyens de fixation 26, ceux-ci sont de préférence disposés à proximité des raccordements des bords longitudinaux et transversaux de la platine 22.

De plus pour simplifier le réglage de la position de l'élément d'équipement 12, les moyens de fixation 26 associés aux premiers éléments intermédiaires de fixation 34a sont situés à proximité d'un bord transversal de la platine 22, ici, le bord avant 60, et les seconds éléments intermédiaires de fixation 34b sont disposés à proximité du bord transversal opposé de la platine 22, ici le bord arrière 62.

Il sera compris que si l'accès aux moyens de fixation 26 ne peut se faire que depuis une face autre que la face avant 18 de l'élément d'équipement 12, les moyens de fixation 26 seront orientés pour permettre le montage et le réglage depuis cette face.

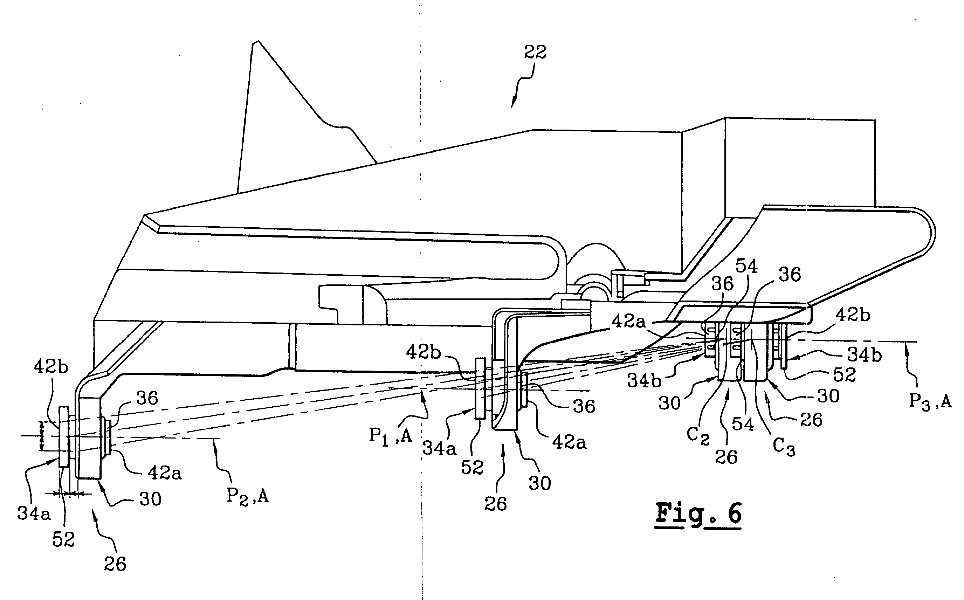

Comme on peut le voir sur la figure 6, les moyens de fixation 26 associés aux premiers éléments intermédiaires de fixation 34a, sont agencés dans des plans horizontaux "P1" et "P2" qui sont situés en dessous du plan horizontal "P3" des moyens de fixation 26 associés aux seconds éléments intermédiaires de fixation 34b.

Le décalage vertical entre les plans "P1", "P2 " et "P3" permet notamment de faire pivoter le phare 12 autour d'un axe sensiblement transversal lors du réglage de la position des premiers éléments intermédiaires de fixation 34a par rapport aux pattes 30 associées.

Le montage de l'élément d'équipement 12 sur l'élément de structure de caisse 28 du véhicule 10, puis le réglage de sa position par rapport à l'élément de carrosserie extérieure 14 peut s'effectuer suivant une méthode comportant les étapes suivantes :

Tout d'abord, selon une première étape, l'élément d'équipement 12 est fixé sur la platine 22 par des moyens connus.

Selon une seconde étape, l'ensemble formé par l'élément d'équipement 12 et la platine 22 est globalement monté en position par rapport à l'élément de structure de caisse 28.

Selon une troisième étape, l'ensemble est fixé à l'élément de structure de caisse 28 par l'intermédiaire des moyens de fixation 26 associés aux seconds éléments intermédiaires de fixation 34b.

Les seconds éléments intermédiaires de fixation 34b n'étant plus accessibles après le montage de l'élément d'équipement 12, les moyens de verrouillage 40 associés aux seconds éléments intermédiaires de fixation 34b sont alors verrouillés définitivement.

Selon une quatrième étape, les éléments de carrosserie extérieure 14 sont montés sur le véhicule 10.

Selon une cinquième étape, la position de l'élément d'équipement 12 par rapport à l'élément de carrosserie extérieure 14 est réglée en modifiant la position des premiers éléments intermédiaires de fixation 34a par rapport aux moyens de fixation 26 qui leurs sont associés et/ou par rapport à l'élément de structure de caisse 28.

Enfin, selon une sixième et dernière étape, la position de l'élément d'équipement 12 est figée en fixant définitivement les premiers éléments intermédiaires de fixation 34a par l'intermédiaire des moyens de verrouillage 40 associés.

Les réglages de la position des premiers éléments intermédiaires de fixation 34a par rapport aux moyens de fixation 26 et/ou par rapport à la structure de caisse 28 permettent une rotation de la platine 22 autour d'un centre instantané de rotation "C" ainsi qu'une translation de la platine 22 parallèlement à sa direction générale longitudinale "L". La position du centre instantané de rotation "C" varie en fonction des différentes positions possibles des premiers éléments intermédiaires de fixation 34a.

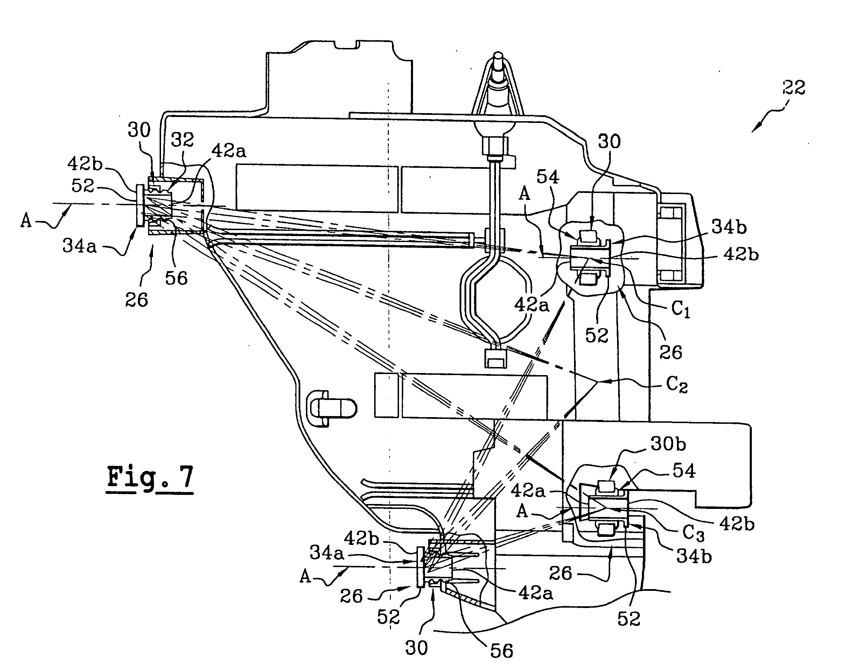

Sur les figures 6 et 7, on a représenté à titre d'exemple non limitatif, les amplitudes de mouvement en rotation des premiers éléments intermédiaires de fixation 34a. L'ensemble des positions "C1", "C2" et "C3" du centre instantané de rotation dépend des déplacements entre les premiers éléments intermédiaires de fixation 34a et les pattes 30 qui leur sont associées. Toutefois, la position transversale du centre instantané de rotation "C" se situe sensiblement entre les deux moyens de fixation 26 associés aux seconds éléments intermédiaires de fixation 34b.

Dans la présente description, la platine 22 a été décrite comme étant un élément distinct de l'élément d'équipement 12. Toutefois, la platine peut être intégrée à l'élément d'équipement dont elle constitue alors la face inférieure 24b.

Dans cette configuration, lors du montage de l'élément d'équipement 12 sur l'élément de structure de caisse 28 la première étape et la seconde étape sont alors remplacées par une étape de montage de l'élément d'équipement 12 sur l'élément de structure de caisse 28.

Il sera aussi compris que des inversions mécaniques simples peuvent constituer des variantes de réalisation de l'invention. Par exemple, la tête 46 de la vis 44 peut être fixée à l'élément de structure de caisse 28 et l'écrou 50 peut s'appuyer contre la seconde extrémité 42b de la douille 36.

L'invention permet donc la fixation rapide d'un élément d'équipement 12 sur un élément de structure de caisse 28 de véhicule automobile 10, ce qui permet, dans le cadre d'une fabrication en grande série, de réduire sensiblement les coûts d'assemblage d'un véhicule comportant un tel agencement.

## Revendications

1. Agencement pour la fixation et le réglage de la position d'un élément d'équipement (12) sur un élément de structure de caisse (28) d'un véhicule automobile(10), du type dans lequel l'élément d'équipement (12) comporte une face de fixation sensiblement plane et d'orientation longitudinale qui comporte au moins trois moyens de fixation (26) de l'élément d'équipement (12) sur l'élément de structure de caisse (28), où les moyens de fixation (26) comportent au moins un premier élément intermédiaire de fixation (34a) qui est destiné à être fixé axialement à l'élément de structure de caisse (28), et qui comporte des moyens de réglage de la position de l'élément d'équipement (12) par rapport à l'élément de structure de caisse (28) **caractérisé en ce que** les moyens de fixation comporte de plus au moins un second élément intermédiaire de fixation (34b) qui est destiné à être fixé axialement à l'élément de structure de caisse (28) et qui comporte des moyens élastiques (54) interposés entre le second élément intermédiaire de fixation (34b) et l'élément d'équipement (12), pour permettre la fixation préalable puis le réglage de la position de l'élément d'équipement (12) par rapport à l'élément de structure de caisse (28).

2. Agencement selon la revendication précédente, **caractérisé en ce que** les éléments intermédiaires de fixation (34a, 34b) sont disposés sensiblement à proximité des raccordements des bords longitudinaux et transversaux de la face de fixation.

3. Agencement selon l'une quelconque des revendications précédentes, **caractérisé en ce qu'**il comporte une paire de premiers éléments intermédiaires de fixation (34a) et une paire de seconds éléments intermédiaires de fixation (34b).

4. Agencement selon la revendication 3 prise en combinaison avec la revendication 2, **caractérisé en ce que** les premiers éléments intermédiaires de fixation (34a) sont disposés sensiblement à proximité des extrémités d'un bord transversal (60) de la face de fixation et les seconds moyens intermédiaires de fixation (34b) sont disposés sensiblement à proximité des extrémités du bord transversal opposé (62) de la face de fixation.

5. Agencement selon l'une quelconque des revendications précédentes, **caractérisé en ce que** l'axe de chaque élément intermédiaire de fixation (34a, 34b) est sensiblement parallèle à la direction d'orientation longitudinale (L) de la face de fixation.

6. Agencement selon l'une quelconque des revendications précédentes, **caractérisé en ce que** chaque moyen de fixation (26) comporte une patte (30) qui fait saillie à partir de la face de fixation et dont un perçage (32) reçoit une douille (36), notamment cylindrique, formant l'élément intermédiaire de fixation (34a, 34b) dont un perçage (38) est destiné à être traversé par un moyen de verrouillage axial (40) de l'élément intermédiaire de fixation (34a, 34b).

7. Agencement selon la revendication précédente, **caractérisé en ce que** la douille (36) formant le premier élément intermédiaire de fixation (34a) est susceptible de coulisser axialement de manière réglable par rapport à la patte (30) qui la reçoit.

8. Agencement selon l'une quelconque des revendications précédentes, **caractérisé en ce que** la périphérie de la douille (36) comporte un filetage (56) qui coopère avec un taraudage (58) formé à l'intérieur du perçage (32) de la patte (30).

9. Agencement selon l'une des revendications 7 ou 8, **caractérisé en ce que** le moyen de verrouillage axial (38) est monté avec jeu radial dans la douille (36) pour permettre un mouvement transversal de l'élément d'équipement (12) par rapport à l'élément de structure de caisse (28).

10. Agencement selon la revendication 5, **caractérisé en ce qu'**un élément tubulaire élastique (54) est interposé entre la douille (36) formant le second élément intermédiaire de fixation (34b) et la patte associée (30).

11. Agencement selon l'une quelconque des revendications précédentes, **caractérisé en ce** la face de fixation de l'élément d'équipement (12) est portée par une platine (22) indépendante sur laquelle l'élément d'équipement (12) est fixé.

## Claims

1. Fitting for fixing and adjusting the position of an equipment part (12) on an element of the body structure (28) of a motor vehicle (10), of the type in which the equipment part (12) comprises a substantially flat fixing face of longitudinal orientation, which comprises at least three means (26) for fixing the equipment part (12) on the element of the body structure (28), wherein the means of fixing (26) comprise at least one first intermediate fixing element (34a) which is intended to be fixed axially to the element of the body structure (28), and which comprises means for adjusting the position of the equipment part (12) relative to the element of the body structure (28), **characterized in that** the means of fixing comprise at least one second intermediate fixing element (34b) which is intended to be fixed axially to the element of the body structure (28) and which comprises flexible means (54) interposed between the second intermediate fixing element (34b) and the equipment part (12), to allow preliminary fixing then adjustment of the position of the equipment part (12) relative to the element of the body structure (28).

2. Fitting according to the above claim, **characterized in that** the intermediate fixing elements (34a, 34b) are arranged substantially near to the connections of the longitudinal and transversal edges of the fixing face.

3. Fitting according to either of the above claims, **characterized in that** it comprises a pair of first intermediate fixing elements (34a) and a pair of second intermediate fixing elements (34b).

4. Fitting according to claim 3 combined with claim 2, **characterized in that** the first intermediate fixing elements (34a) are arranged substantially near to the ends of a transversal edge (60) of the fixing face and the second intermediate means of fixing (34b) are arranged substantially near to the ends of the opposite transversal edge (62) of the fixing face.

5. Fitting according to anyone of the above claims, **characterized in that** the axis of each intermediate fixing element (34a, 34b) is substantially parallel with the direction of longitudinal orientation (L) of the fixing face.

6. Fitting according to anyone of the above claims, **characterized in that** each means of fixing (26) comprises a foot (30) which protrudes from the fixing face and whose drilling (32) receives a socket (36), in particular cylindrical, forming the intermediate fixing element (34a, 34b) whose drilling (38) is intended to be crossed over by a means of axial interlocking (40) of the intermediate fixing element (34a, 34b).

7. Fitting according to the above claim, **characterized in that** the socket (36) forming the first intermediate fixing element (34a) is capable of sliding axially in an adjustable way relative to the foot (30) which receives it.

8. Fitting according to anyone of the above claims, **characterized in that** the periphery of the socket (36) comprises a thread (56) which cooperates with tapping (58) formed inside the drilling (32) of the foot (30).

9. Fitting according to either of claims 7 or 8, **characterized in that** the means of axial interlocking (38) is mounted with radial play in the socket (36) to allow transversal movement of the equipment part (12) relative to the element of the body structure (28).

10. Fitting according to claim 5, **characterized in that** a flexible tubular element (54) is interposed between the socket (36) forming the second intermediate fixing element (34b) and the associated foot (30).

11. Fitting according to anyone of the above claims, **characterized in that** the fixing face of the equipment part (12) is supported by an independent plate (22) on which the equipment part (12) is fixed.

## Patentansprüche

1. Einrichtung zum Befestigen und Justieren der Position eines Ausrüstungselements (12) an einem Karosseriestrukturelement (28) eines Kraftfahrzeugs (10), des Typs, bei dem das Ausrüstungselement (12) eine im Wesentlichen ebene und in Längsrichtung orientierte Befestigungsseite aufweist, die wenigstens drei Mittel (26) zum Befestigen des Ausrüstungselements (12) an dem Karosseriestrukturelement (28) umfasst, bei der die Befestigungsmittel (26) wenigstens ein erstes Befestigungszwischenelement (34a) aufweisen, das dazu bestimmt ist, axial an dem Karosseriestrukturelement (28) befestigt zu werden, und das Mittel zum Justieren der Position des Ausrüstungselements (12) bezüglich des Karosseriestrukturelements (28) aufweist,
**dadurch gekennzeichnet, dass** die Befestigungsmittel ferner wenigstens ein zweites Befestigungszwischenelement (34b) aufweisen, das dazu bestimmt ist, axial an dem Karosseriestrukturelement (28) befestigt zu werden, und das elastische Mittel (54) aufweist, die zwischen das zweite Befestigungszwischenelement (34b) und das Ausrüstungselement (12) eingefügt sind, um die vorläufige Befestigung und die anschließende Justierung der Position des Ausrüstungselements (12) bezüglich des Karosseriestrukturelements (28) zu ermöglichen.

2. Einrichtung nach dem vorhergehenden Anspruch,
**dadurch gekennzeichnet, dass** die Befestigungszwischenelemente (34a, 34b) im Wesentlichen in der Nähe der Verbindungen der Längs- und Querränder der Befestigungsseite angeordnet sind.

3. Einrichtung nach einem der vorhergehenden Ansprüche,
**dadurch gekennzeichnet, dass** sie ein Paar erste Befestigungszwischenelemente (34a) und ein Paar zweite Befestigungszwischenelemente (34b) umfasst.

4. Einrichtung nach Anspruch 3 in Verbindung mit Anspruch 2,
**dadurch gekennzeichnet, dass** die ersten Befestigungszwischenelemente (34a) im Wesentlichen in der Nähe der Enden eines Querrands (60) der Befestigungsseite angeordnet sind, und dass die zweiten Befestigungszwischenelemente (34b) im Wesentlichen in der Nähe der Enden des gegenüberliegenden Querrands (62) der Befestigungsseite angeordnet sind.

5. Einrichtung nach einem der vorhergehenden Ansprüche,
**dadurch gekennzeichnet, dass** die Achse eines jeden Befestigungszwischenelements (34a, 34b) im Wesentlichen parallel zur längsorientierten Richtung (L) der Befestigungsseite verläuft.

6. Einrichtung nach einem der vorhergehenden Ansprüche,
**dadurch gekennzeichnet, dass** jedes Befestigungsmittel (26) einen Fuß (30) aufweist, der von der Befestigungsseite aus vorsteht und von dem eine Bohrung (32) eine insbesondere zylindrische, das Befestigungszwischenelement (34a, 34b) bildende Hülse (36) aufnimmt, von der eine Bohrung (38) dazu bestimmt ist, von einem Mittel (40) zur axialen Arretierung des Befestigungszwischenelements (34a, 34b) durchquert zu werden.

7. Einrichtung nach dem vorhergehenden Anspruch,
**dadurch gekennzeichnet, dass** die das erste Befestigungszwischenelement (34a) bildende Hülse (36) bezüglich des sie aufnehmenden Fußes (30) axial verstellbar zu gleiten vermag.

8. Einrichtung nach einem der vorhergehenden Ansprüche,
**dadurch gekennzeichnet, dass** der Außenumfang der Hülse (36) ein Gewinde (56) aufweist, das mit einem innen in der Bohrung (32) des Fußes (30) ausgebildeten Innengewinde (58) zusammenwirkt.

9. Einrichtung nach einem der Ansprüche 7 oder 8,
**dadurch gekennzeichnet, dass** das axiale Arretiermittel (38) mit radialem Spiel in der Hülse (36) angebracht ist, um eine Querverschiebung des Ausrüstungselements (12) bezüglich des Karosseriestrukturelements (28) zu ermöglichen.

10. Einrichtung nach Anspruch 5,
**dadurch gekennzeichnet, dass** ein elastisches rohrförmiges Element (54) zwischen die das zweite Befestigungszwischenelement (34b) bildende Hülse (36) und den zugehörigen Fuß (30) eingefügt ist.

11. Einrichtung nach einem der vorhergehenden Ansprüche,
**dadurch gekennzeichnet, dass** die Befestigungsseite des Ausrüstungselements (12) von einer separaten Platte (22) getragen ist, auf der das Ausrüstungselement (12) befestigt ist.
